# EUROPEAN PATENT APPLICATION

(11) **EP 4 756 256 A1**
(43) Date of publication of application: **10.06.2026**
(21) Application number: 24217489.4
(22) Date of filing: 04.12.2024
(51) Int. Cl.: F16H 57/04

(54) **CONTROLLED OIL LEVELS FOR PADDLING-LUBRICATED TRANSMISSION TYPES**

(71) Applicant: Schaeffler Technologies AG & Co. KG, 91074 Herzogenaurach (DE)
(72) Inventor: Töns, Matthias, 80687 München (DE); Hövermann, Markus, 80687 München (DE); Daun, Nico, 80687 München (DE); Krone, Nils, 80687 München (DE)
(74) Representative: Schaeffler Technologies

(57) **Abstract**

The present invention relates to a reducer (10) having a fluid distribution feature of the present invention includes a first reservoir (20), or first sump, in which one or more gears (18a, 18b, 18c) of the reducer (10) are at least partially disposed in the first reservoir (20), and a second reservoir (28), or second sump, positioned arbitrarily in the housing of the reducer (10). A valve assembly (32) is also disposed in the housing and in fluid communication with the second reservoir (28) such that specific amounts of the fluid (22) are dispersed by the valve assembly (32) to provide cooling of the gears (18a, 18b, 18c) in the reducer (10). The amount of fluid (22) dispersed by the valve assembly (32) is regulated and determined by the operating condition of the reducer (10). The higher the required torque, the greater the amount of fluid (22) dispensed by the valve assembly (32). The amount of fluid (22) dispensed by the valve assembly (32) may also be controlled by a fluid level sensor either in the first reservoir (20) or the second reservoir (28), where the fluid level sensor detects the amount of fluid (22) (in the first reservoir (20) or the second reservoir (28)), and the valve assembly (32) disperses at least a minimum amount of fluid (22) to provide sufficient lubrication. The amount of fluid (22) dispersed may also be dependent upon the operating condition of the reducer (10), such as torque and temperature. The reducer (10) having a fluid distribution feature of the present invention facilitates the regulation of the amount of fluid (22) being splashed by the gears (18a, 18b, 18c) more precisely to provide a minimum amount of fluid (22) for proper lubrication and cooling, also reducing splash losses and improving efficiency.

## Description

The invention relates generally to a reducer for an axle drive assembly having a fluid distribution feature which controls the distribution of fluid onto one or more of the gears of the reducer, facilitating controlled cooling of the reducer and increasing efficiency.

Electric vehicles typically have an axle drive assembly, where the axle drive assembly includes a battery which powers an electric motor, and the electric motor drives a gearbox, or reducer, which transfers power to a differential assembly. The reducer typically has one or more gears having various sizes and ratios to transfer power to the differential. The reducer is typically partially filled with a specific volume of fluid, or oil, to facilitate lubrication and cooling. The fluid collects in a sump of a reservoir, and at least one of the gears is partially disposed in the sump.

The housing of the reducer may be one or more channels integrally formed as part of the housing. The amount of the fluid in the reducer is selected such that during all operating conditions, due to the rotation of the gears, the oil is distributed in the housing of the reducer, and the various channels of the housing direct the fluid to the gears and bearings upon which the gears are mounted.

The rotation of one or more of the gears in the sump of the fluid results in splashing losses during operation. This reduces the efficiency of the reducer because not all operating conditions of the reducer require the same amounts of fluid for proper lubrication and temperature control. For example, in during operation where the reducer is under a partial load or low load, a less amount of fluid is necessary, which has a positive effect on splash losses.

Therefore, there exists a need for a reducer of an axle drive assembly which uses varying amounts of fluid for lubrication and cooling during different operating conditions, which facilitates optimizing efficiency.

It is therefore an object of the present invention to provide a reducer having at least one fluid distribution feature which controls the amount of fluid dispersed onto the gears of the reducer during various operating conditions, and a method for the same, thereby facilitating cooling of the gears, and improving efficiency.

This object may be achieved by the reducer having at least one fluid distribution feature according to independent claim 1, and the method according to independent claim 7. Preferred embodiments are given in the dependent claims.

In an embodiment, a reducer having a fluid distribution feature of the present invention includes a first reservoir, or first sump, in which one or more gears of the reducer are at least partially disposed in the first reservoir, and a second reservoir, or second sump, positioned arbitrarily in the housing of the reducer. A valve assembly is also disposed in the housing and in fluid communication with the second reservoir such that specific amounts of the fluid are dispersed by the valve assembly to provide cooling of the gears in the reducer. The amount of fluid dispersed by the valve assembly is regulated and determined by the operating condition of the reducer. The higher the required torque, the greater the amount of fluid dispensed by the valve assembly. The amount of fluid dispensed by the valve assembly may also be controlled by a fluid level sensor either in the first reservoir or the second reservoir, where the fluid level sensor detects the amount of fluid (in the first reservoir or the second reservoir), and the valve assembly disperses at least a minimum amount of fluid to provide sufficient lubrication. The amount of fluid dispersed may also be dependent upon the operating condition of the reducer, such as torque and temperature. The reducer having a fluid distribution feature of the present invention facilitates the regulation of the amount of fluid being splashed by the gears more precisely to provide a minimum amount of fluid for proper lubrication and cooling, also reducing splash losses and improving efficiency.

In an embodiment, the present invention is a reducer of an axle drive assembly having a fluid distribution feature, the reducer having a plurality of gears, a plurality of bearings, each of the gears mounted to a corresponding one of the bearings, at first reservoir, at least one of the gears is at least partially disposed in the first reservoir, a second reservoir, and a valve assembly in fluid communication with the second reservoir. The valve assembly is selectively changed between an open position and a closed position, and any intermediate position therebetween, such that when the valve assembly is in the open position, fluid is dispensed from the second reservoir onto one or more of the gears and one or more of the bearings.

In an embodiment, at least one of the gears is at least partially disposed in the first reservoir such that at least a portion of the fluid is splashed onto the gears and the bearings as the gears rotate.

In an embodiment, at a portion of the fluid flows from the second reservoir through the valve assembly and is dispersed onto the gears and the bearings when the valve assembly is in the open position, or in any intermediate position between the open position and the closed position.

In an embodiment, the fluid is gravity fed from the second reservoir through the valve assembly when the valve assembly is in the open position, or in any intermediate position between the open position and the closed position.

In an embodiment, a pump is in fluid communication with the first reservoir and the second reservoir. The pump transfers the fluid from the first reservoir to the second reservoir, and the valve assembly selectively disperses the fluid onto one or more of the gears and one or more of the bearings.

In an embodiment, the valve assembly is in the closed position when the reducer is operating under a low-load, and is in the open position when the reducer is operating under a high-load.

In an embodiment, the present invention is a method for distributing fluid to the gears of a reducer, comprising the steps of providing a plurality of gears, providing a plurality of bearings, each of the gears mounted to a corresponding one of the bearings, providing a first reservoir, providing a second reservoir, providing a valve assembly in fluid communication with the second reservoir, and providing a fluid, and at least a portion of the fluid is located in the first reservoir. The method includes the steps of rotating one or more of the gears such that at least a portion of the fluid is splashed inside the reducer and collects in the second reservoir. The method includes the step of placing the valve assembly in an open position when the reducer is operating under a heavy load, such that the portion of the fluid in the second reservoir flows through the valve assembly and onto one or more of the gears and one or more of the bearings. The method includes the step of placing the valve assembly in a closed position when the reducer is operating under a light load, preventing the portion of the fluid in the second reservoir from flowing through the valve assembly. The method includes the step of placing the valve assembly in an intermediate position when the reducer is operating under an intermediate load.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The present invention will become more fully understood from the detailed description and the accompanying drawings, wherein:
Fig. 1 is a diagram of several components of a reducer for an axle drive assembly having a fluid distribution feature, according to embodiments of the present invention; and
Fig. 2 is a diagram of several components of a second embodiment of a reducer for an axle drive assembly having a fluid distribution feature, according to embodiments of the present invention.

The following description of the preferred embodiment(s) is merely exemplary in nature and is in no way intended to limit the invention, its application, or uses.

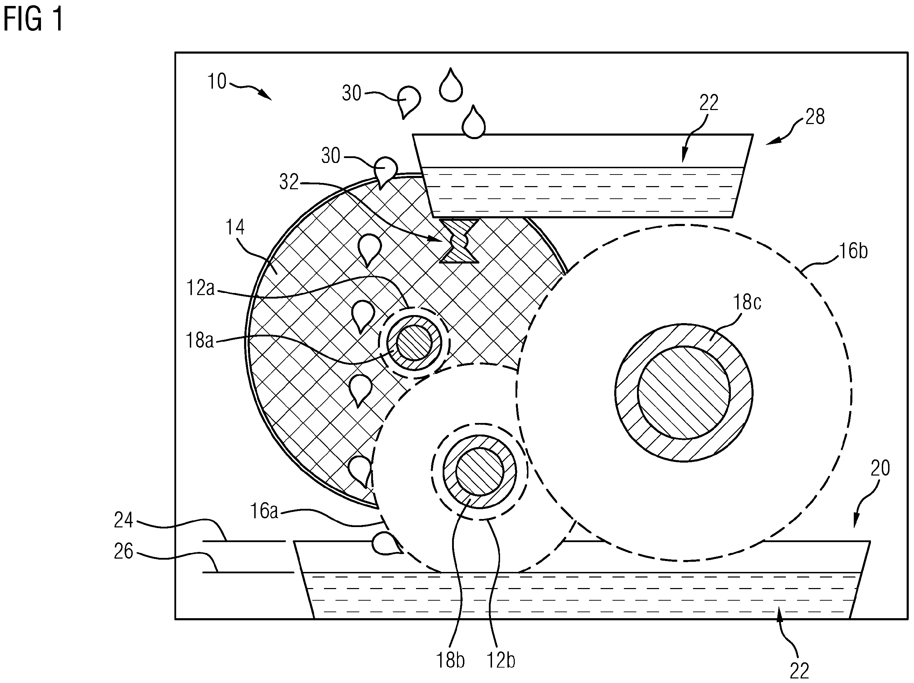

An embodiment of a reducer for an axle drive assembly where the reducer has a fluid distribution feature according to the present invention is shown in Fig. 1, generally at 10. The reducer 10 includes a plurality of gears, and in this embodiment includes a first pinion gear 12a which is connected to a rotor 14. The first pinion gear 12a is in mesh with a first drive gear 16a, and the first drive gear 16a is connected to and drives a second pinion gear 12b. The second pinion gear 12b is in mesh with a second drive gear 16b. The first pinion gear 12a and rotor 14 are mounted to and rotate on a first bearing assembly 18a, the first drive gear 16a and second pinion gear 12b are mounted to and rotate on a second bearing assembly 18b, and the second drive gear 16b is mounted to and rotates on a third bearing assembly 18c.

The first pinion gear 12a is connected to and driven by the rotor 14, where the rotor 14 is part of an electric motor (not shown). The first pinion gear 12a may be part of a planetary gear set driven by the rotor 14, or driven by the rotor 14 of the electric motor directly.

The first drive gear 16a and second pinion gear 12b are driven by the first pinion gear 12a. The first drive gear 16a and second pinion gear 12b are connected together and rotate in unison.

As mentioned above, the second drive gear 16b is driven by the second pinion gear 12b. In the embodiment shown, the second drive gear 16b is mounted on the third bearing assembly 18c, and the second drive gear 16b is part of a differential assembly connected to one or more axle shafts. The second drive gear 16b may be connected to a carrier of the differential assembly, where the carrier includes one or more differential gears connected to corresponding axle shafts.

The reducer 10 also includes a first reservoir, shown generally at 20, and there is fluid, shown generally at 22, disposed in the first reservoir 20. In a non-limiting example, the first reservoir 20 may be filled with the fluid 22 such that the fluid 22 is located at a first level 24 in the first reservoir 20. The first reservoir 20 may also be filled with the fluid 22 such that the fluid 22 is located at a second level 26 in the first reservoir 20. The fluid 22 may fill the first reservoir 20 to other various fluid levels as well.

The reducer 10 also includes a second reservoir, shown generally at 28, and a portion of the fluid 22 is located in the second reservoir 28. Connected to the second reservoir 28 is a valve assembly, shown generally at 32.

As shown in Fig. 1, when the first reservoir 20 is filled with the fluid 22 to the first level 24, the first drive gear 16a and the second drive gear 16b are partially disposed in the fluid 22. When the first reservoir 20 is filled with the fluid 22 to the second level 26, only the first drive gear 16a is partially disposed in the fluid 22.

During operation, as the first pinion gear 12a, the first drive gear 16a, the second pinion gear 12b, and the second drive gear 16b rotate. Because of the first drive gear 16a and/or the second drive gear 16b being partially disposed in the fluid 22, the fluid 22 is splashed around inside the reducer 10, such that the fluid 22 contacts the gears 12a,16a,12b,16b and the bearings 18a, 18b, 18c. The portion of the fluid 22 being splashed is indicated by the drops 30 in Fig. 1. The fluid 22 contacting the gears 12a, 16a,12b,16b provides desired cooling and lubrication to the gears 12a, 16a,12b,16b, as well as the bearings 18a, 18b, 18c upon which the gears 12a, 16a,12b,16b are mounted.

There are various operating conditions of the vehicle where the reducer 10 is under either increased or decreased loads. For example, the reducer 10 may be under increased or heavy load when the vehicle is traveling up a positively sloped grade or when the vehicle is being used to tow a trailer. Conversely, the reducer 10 may be under a reduced or low load, such as when the vehicle is coasting, which may occur when the vehicle is travelling on a negatively sloped grade. These different operating conditions may require a greater or lesser amount of fluid 22 to lubricate and cool the gears 12a, 16a,12b,16b and the bearings 18a, 18b, 18c.

During any operating condition of the reducer 10, there is a portion of the fluid 22 that collects in the second reservoir 22 as a result of the fluid 22 being splashed around by the gears 12a, 16a, 12b,16b inside the reducer 10. When all of the fluid 22 is in the first reservoir 20, the fluid 22 fills the first reservoir 20 to the first level 24. During operation of the reducer 10, the fluid 22 is splashed around such that at least a portion of the fluid 22 collects in the second reservoir 28.

To facilitate the gears 12a, 16a,12b,16b and the bearings 18a, 18b, 18c being exposed to the necessary amount of the fluid 22 for proper lubrication and cooling, the valve assembly 32 is selectively changed between an open position and a closed position, and any intermediate position therebetween. When the valve assembly 32 is in the open position, the fluid 22 in the second reservoir 28 is able to flow through the valve assembly 32, and onto one or more of the gears 12a, 16a, 12b, 16b and the bearings 18a, 18b, 18c. The fluid 22 flows from the second reservoir 28 and through the valve assembly 32 via a gravity feed.

When all of the fluid 22 is in the first reservoir 20, and the fluid 22 is filled in the first reservoir 20 to the first level 24, there is more of the fluid 22 than is necessary for proper lubrication and cooling of the gears 12a, 16a,12b,16b and the bearings 18a, 18b, 18c when the reducer 10 is operating under a low load condition. As the fluid 22 is splashed by the rotation of the gears 12a, 16a, 12b,16b, a portion of the fluid 22 collects in the second reservoir 22. The amount of the fluid 22 may collect in the second reservoir 22 such that the fluid 22 in the first reservoir 20 is reduced to the second level 26. The first reservoir 20 being filled with the fluid 22 to the second level 26 reduces the amount of the fluid 22 which is splashed by the gears 12a, 16a,12b,16b during operation. The lower the amount of the fluid 22 which is splashed during operation of the reducer 10 results in the reducer 10 operating more efficiently. There is less drag on the rotation of each of the gears 12a, 16a,12b,16b and the bearings 18a, 18b, 18c due to the viscosity of the fluid 22. The lower the amount of the fluid 22 splashed on the gears 12a, 16a, 12b, 16b improves the operating efficiency of the reducer 10. The lower the level of the fluid 22, the lower the losses. The most efficient operation of the reducer 10 is using the least amount of the fluid 22 to provide sufficient lubrication and cooling the gears 12a, 16a, 12b, 16b and the bearings 18a, 18b, 18c during the various operating conditions of the reducer 10.

The improved operating efficiency of the reducer 10 when the fluid 22 in the first reservoir 20 is reduced to the second level 26 is used when the reducer 10 is in a low-load operating condition.

However, when the reducer 10 is operating under an increased or heavy load, more of the fluid 22 is needed to provide sufficient cooling and lubrication. During operating conditions when the reducer 10 is operating under an increased or heavy load, the valve assembly 32 is placed in the open position to allow the fluid 22 in the second reservoir 28 to flow onto one or more of the gears 12a, 16a, 12b,16b and increase the amount of the fluid 22 splashed by the gears 12a, 16a,12b,16b, increasing the amount of lubrication and cooling of the gears 12a, 16a, 12b,16b and the bearings 18a, 18b, 18c. The valve assembly 32 may be placed in the open position or closed position, or any intermediate position therebetween, as needed to facilitate any desired amount of the fluid 22 flowing onto the one or more of the gears 12a, 16a,12b,16b and the bearings 18a, 18b, 18c. More specifically, the valve assembly 32 may be placed in a partially open position to allow a specific amount of the fluid 22 to flow through the valve assembly 32.

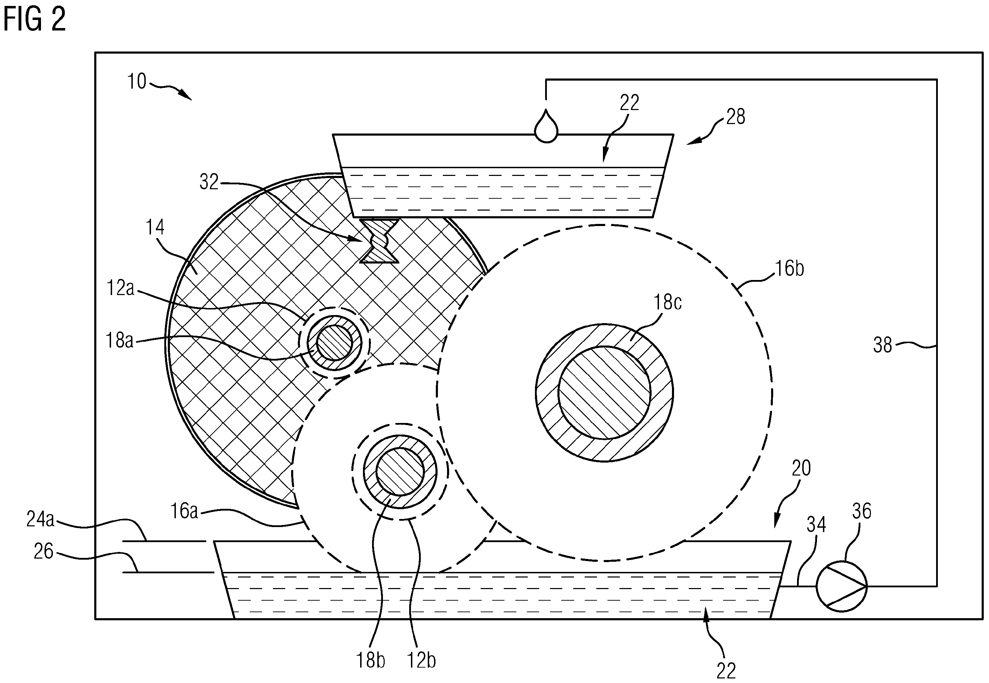

An alternate embodiment of the present invention is shown in Fig. 2, with like numbers referring to like elements. In this embodiment, a conduit 34 is connected to and in fluid communication with the first reservoir 20 and a pump 36, and another conduit 38 is connected to and in fluid communication with the pump 36. The conduit 38 has an outlet above the second reservoir 28. The pump 36 transfers the fluid 22 from the first reservoir 20 through the conduit 34, the pump 36, and through the conduit 38 to the second reservoir 28. In this embodiment, (in a similar manner to the previous embodiment) the valve assembly 32 may be placed in the open position or closed position, or any intermediate position therebetween, as needed to facilitate any desired amount of the fluid 22 flowing onto the one or more of the gears 12a, 16a, 12b, 16b and the bearings 18a, 18b, 18c.

In another alternate embodiment, several channels or conduits may be formed as part of the housing of the reducer 10, such that the channels direct the fluid 22 onto the gears 12a, 16a, 12b, 16b and the bearings 18a, 18b, 18c. The valve assembly 32 is used to selectively disperse the fluid 22 from the second reservoir 28 to one or more of the channels.

In another alternate embodiment, the valve assembly 32 may be positioned to transfer the fluid from the second reservoir 28 to the first reservoir 20, such that the gears 12a, 16a,12b,16b

The present invention is a fluid distribution feature for a reducer 10 of an axle drive assembly having at least one reservoir 20, where one or more of a plurality of gears 12a, 16a, 12b, 16b is at least partially disposed in the reservoir 20, such that at least one of the gears 12a, 16a, 12b, 16b is partially submerged in a sump of fluid 22. The reducer 10 includes a second reservoir 28, and a valve assembly 32 in fluid communication with the second reservoir 28. During operation of the reducer 10, the rotation of the gears 12a, 16a, 12b, 16b causes at least a portion of the fluid 22 to splash inside the housing of the reducer, lubricating and cooling the gears 12a, 16a, 12b, 16b and the bearings 18a, 18b, 18c upon which the gears 18a, 18b, 18c are mounted. Some of the fluid 22 being splashed also collects in the second reservoir 28, reducing the portion of the fluid 22 in the first reservoir 20. The valve assembly 32 remains in a closed position when the reduced amount of the fluid 22 in the reservoir 20 is sufficient to lubricate and provide cooling to the gears 12a, 16a,12b,16b and the bearings 18a, 18b, 18c. This occurs when the reducer 10 is operating under a reduced load, or low load condition. However, when the reducer 10 is operating under an increased load, or heavy load condition, the valve assembly 32 is placed in an open position, allowing the fluid to flow from the second reservoir 28 onto the gears 12a, 16a, 12b, 16b, providing additional lubrication and cooling. Using a limited portion of the fluid 22 to lubricate the gears 12a, 16a, 12b, 16b and the bearings 18a, 18b, 18c during low load operating conditions of the reducer 10 decreases the drag on the gears 12a, 16a, 12b, 16b and the bearings 18a, 18b, 18c, improving the efficiency of the reducer 10. The valve assembly 32 is changed between open and closed positions, or any intermediate position therebetween, to allow only the amount of the fluid 22 to flow onto the gears 12a, 16a,12b,16b and the bearings 18a, 18b, 18c that is necessary to provide sufficient lubrication and cooling for each operating condition of the reducer 10, improving efficiency.

The description of the invention is merely exemplary in nature and, thus, variations that do not depart from the gist of the invention are intended to be within the scope of the invention. Such variations are not to be regarded as a departure from the spirit and scope of the invention.

## Claims

1. A reducer (10) of an axle drive assembly having a fluid distribution feature, the reducer (10) comprising:
- a plurality of gears (12a, 16a, 12b, 16b);
- a plurality of bearings (18a, 18b, 18c), each of the plurality of gears (12a, 16a, 12b, 16b) mounted to a corresponding one of the plurality of bearings (18a,18b,18c);
- at first reservoir (20), at least one of the plurality of gears (12a, 16a, 12b, 16b) is at least partially disposed in the first reservoir (20);
- a second reservoir (28); and
- a valve assembly (32) in fluid communication with the second reservoir (28);
- wherein the valve assembly (32) is selectively changed between an open position and a closed position, and any intermediate position therebetween, such that when the valve assembly (32) is in the open position, fluid (22) is dispensed from the second reservoir (28) onto one or more of the gears (12a, 16a, 12b, 16b) and one or more of the plurality of bearings (18a, 18b, 18c).

2. The reducer (10) of an axle drive assembly having a fluid distribution feature of claim 1, wherein at least one of the plurality of gears (12a, 16a, 12b, 16b) is at least partially disposed in the first reservoir (20) such that at least a portion of the fluid (22) is splashed onto the plurality of gears (12a, 16a, 12b, 16b) and the plurality of bearings (18a, 18b, 18c) as the plurality of gears (12a, 16a, 12b, 16b) rotates.

3. The reducer (10) of an axle drive assembly having a fluid distribution feature of one of the preceding claims, wherein at least a portion of the fluid (22) flows from the second reservoir (28) through the valve assembly (32) and is dispersed onto the plurality of gears (12a, 16a, 12b, 16b) and the plurality of bearings (18a, 18b, 18c) when the valve assembly (32) is in the open position, or in any intermediate position between the open position and the closed position.

4. The reducer (10) of an axle drive assembly having a fluid distribution feature of one of the preceding claims, wherein the fluid (22) is gravity fed from the second reservoir (28) through the valve assembly (32) when the valve assembly (32) is in the open position, or in any intermediate position between the open position and the closed position.

5. The reducer (10) of an axle drive assembly having a fluid distribution feature of one of the preceding claims, further comprising:
- a pump (36) in fluid communication with the first reservoir (20) and the second reservoir (28);
- wherein the pump (36) transfers the fluid (22) from the first reservoir (20) to the second reservoir (28), and the valve assembly (32) selectively disperses the fluid (22) onto one or more of the plurality of gears (12a, 16a, 12b, 16b) and one or more of the plurality of bearings (18a, 18b, 18c).

6. The reducer (10) of an axle drive assembly having a fluid distribution feature of one of the preceding claims, wherein the valve assembly (32) is in the closed position when the reducer (10) is operating under a low-load, and is in the open position when the reducer (10) is operating under a high-load.

7. A method for distributing fluid to the gears (12a, 16a, 12b, 16b) of a reducer (10), comprising the steps of:
- providing a plurality of gears (12a, 16a, 12b, 16b);
- a plurality of bearings (18a, 18b, 18c), each of the plurality of gears (12a, 16a, 12b, 16b) mounted to a corresponding one of the plurality of bearings (18a,18b,18c);
- providing a first reservoir (20);
- providing a second reservoir (28);
- providing a valve assembly (32) in fluid communication with the second reservoir (28); and
- providing a fluid (22), at least a portion of the fluid (22) located in the first reservoir (20);
- rotating one or more of the plurality of gears (12a, 16a, 12b, 16b) such that at least a portion of the fluid (22) is splashed inside the reducer (10) and collects in the second reservoir (28);
- placing the valve assembly (32) in an open position when the reducer (10) is operating under a heavy load, such that the portion of the fluid (22) in the second reservoir (28) flows through the valve assembly (32) and onto one or more of the plurality of gears (12a, 16a, 12b, 16b) and one or more of the plurality of bearings (18a, 18b, 18c);
- placing the valve assembly (32) in a closed position when the reducer (10) is operating under a light load, preventing the portion of the fluid (22) in the second reservoir (28) from flowing through the valve assembly (32);
- placing the valve assembly (32) in an intermediate position when the reducer (10) is operating under an intermediate load.
